# EUROPEAN PATENT APPLICATION

(11) **EP 1 843 526 A1**
(43) Date of publication of application: **10.10.2007**
(21) Application number: 06007211.3
(22) Date of filing: 05.04.2006
(51) Int. Cl.: H04L 12/40

(54) **Data communication system based on serial buses**

(71) Applicant: Nec Electronics (Europe) GmbH, 40472 Düsseldorf (DE)
(72) Inventor: Laschewski, Rüdiger, 40472 Düsseldorf (DE); Kühne, Peter, 40472 Düsseldorf (DE)
(74) Representative: Merkau, Bernhard

(57) **Abstract**

The present invention concerns a data communication system comprising a plurality of serial buses (17), in particular local interconnect network buses (LIN), which are connected to sensors and/or actuators and a central processing unit (1). To improve the available CPU performance for LIN application the invention proposes to interpose a message scheduling unit (2) between the central processing unit (1) and the serial buses (17) for monitoring the serial buses (17) for messages to be activated.

## Description

LIN (LIN: Local Interconnect Network) is a new upcoming low cost network for in-car-use. With its standarized structure it complements the CAN bus (CAN: Controller Area Network) by taking over different applications in sub-networks. These sub-networks are usually connected by CAN to LIN-gateway controllers. Some LIN-specific formats require special micro-controller implementations that are served by standard UART and enhanced LIN-UART (UART: Universal Asynchronous Receiver and Transmitter). The standard UART is made LIN-capable through optimized driver routines that deal with LIN-specific frames. The standard UART and LIN UARTS including LIN-driver are implemented by existing micro-controllers.

Today's LIN-solutions mostly deal with software support for single channel LIN implementations.

An automatic link between data handling and data-scheduling is missing, resulting in needless overhead to be implemented in Software.

Either based on standard UART hardware or using enhanced UART hardware, only rudimentary support is given for LIN-specific protocol issues.

The more, current single channel LIN-implementations are mostly driven by pure master-performance without any special support for protocol-issues or LIN-special implementations like scheduling, power modes and data-handling.

As a rough estimation, about 80 % of today's LIN-implementations are accessed by software, supported by some enhanced LIN-UART functions or by special tailored LIN-hardware.

In combination to these characteristics, future automotive networks are planned in the direction to be more structured and interlaced than today's are.

Current automotive implementations are made by very isolated network-nodes, leading to distributed performance without an adequate utilisation.

Supporting future networks requires strictly planning, including the offer for enough performance within the main-nodes (as there are e.g. CAN-LIN-gateways) to support more than one network within one device.

With respect to multi channel LIN implementations, current hardware is overstrained supporting not only the pure LIN-driver, but also CAN-driver software for gateway functionality, OSEK-like implementations for operating systems, the pure application and some other stuff needed to fulfil the automotive tasks, (OSEK: "Offene Systeme und deren Schnittstellen für die Elektronik in Kraftfahrzeugen)"

Accordingly, it is an object of the invention to provide a LIN-system, which improves the available CPU performance for LIN applications.

This object is achieved by a system as claimed in claim 1; the dependent claims are related to further developments of the invention.

The central idea behind the multi LIN master (MLM) is to provide a message scheduling unit (MSU) which is central to the MLM. All available LIN channels are scanned actively for messages to be activated by the scheduling unit.

The MLM overcomes today's problems implementing multi LIN solutions by providing by a centralized automatic link between the data scheduling unit and the data which have to be handled on the different LIN channels.

In addition, there is scalable support for a user-defined number of LIN buses.

This encloses not only a pure protocol-handler, but also the implementation of additional LIN functionality like support for self-programming via LIN (by enabling different MLM-channels to send non-LIN standard frames with up to 255 Bytes in a row).

It has to be ensured, that the only task to be handled by the CPU is shifting the data between CPU and a LIN macro, together with initial set-up of schedule timings.

A further aspect is the additional support for LIN-specialities like diagnosis, power-modes, self programming via LIN.

To comply with these issues, the specification of the MLM according to the invention was made.
o The MLM offers a scalable (by No. of LIN channels, by No. of data to be handled) receive-/transmit-unit for 1 up to N LIN-channels.
o In addition, a fully automatic synchronization of LIN messages using BREAK-SYNC as specified within the LIN-specification is guaranteed.
o To act on the application-data, 2*16-byte buffers are provided, one for reception, the other for transmission.
o Automatically addition and calculation/comparison for send- and received data is implemented.
o Power save modes are supported, e.g. Wakeup handling and sending sleep-requests.
o All interrupts are saved and will be re-issued after one interrupt (INT) was served due to distributed addresses for each INT to be released, no interrupt flag will be deleted by mistake.
o A handshake-mechanism between a scheduler INT issued and the related data-handled INT provides performance and security.
o Settings for main features of SAE Standard J2602 are provided.
o Support for self-programming via LIN is foreseen.
o Diagnosis-functionality is supported.
o A scheduling unit, is included.
o The scheduling unit is able to automatically start scheduled Rx-/Tx (receive/transmit) entries out of the buffer-RAM.

An embodiment of the invention will be described with respect to the appended Figs.
- Fig. 1: shows the performance-differences for software based up to full hardware driven LIN solutions;
- Fig. 2: shows 8 LIN-UART supporting multi channel LIN, compared to an MLM-Macro;
- Fig. 3: shows a block diagram of the central MLM-functionality;
- Fig. 4: shows a block diagram for multi LIN master with scheduling support according to the invention.
- Fig. 5: shows a scalable MLM implementation, exemplary for an 8-channel solution.
- Fig. 6: shows the memory-usage by an 8-Channel MLM.
- Fig. 7: shows the buffer day out for TX (Transmission) and RX (Reception)

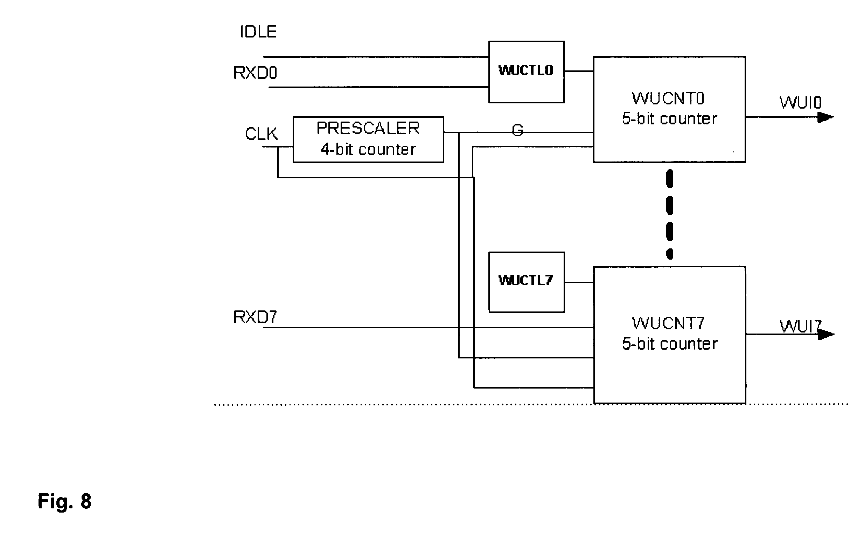

- Fig. 8: shows the circuitry for wake-up and sleep-request.
- Fig. 9: shows the support for LIN by MLM.
- Fig. 10: shows a diagram for explaining the lowering of the amount of INT used for MLM compared to a standard LIN software.
- Fig. 11: shows the overview of a handshake between scheduler INT and data handling INT.
- Fig. 12,: 13, 15 and 16 show the frame structure and the Rx buffer and Tx buffer layout for the automatic scheduling unit,
and
- Fig. 14: is a MLM software flowchart.

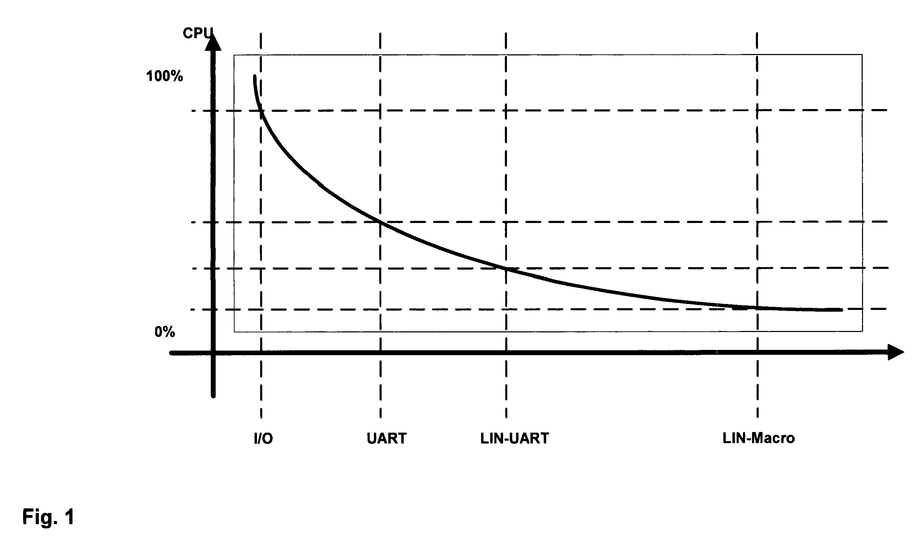

Fig. 1 clearly shows the increase of remaining CPU performance, while advancing from simple port-driven solutions to a real LIN Macro.

Based on this assumption, a theoretical calculation was made, based on the performance of V850-FJ2 (controller manufactured by NEC Corporation) to highlight the differences between mainly software driven LIN master systems as of today, and full hardware-based LIN master implementations, requested for the future.

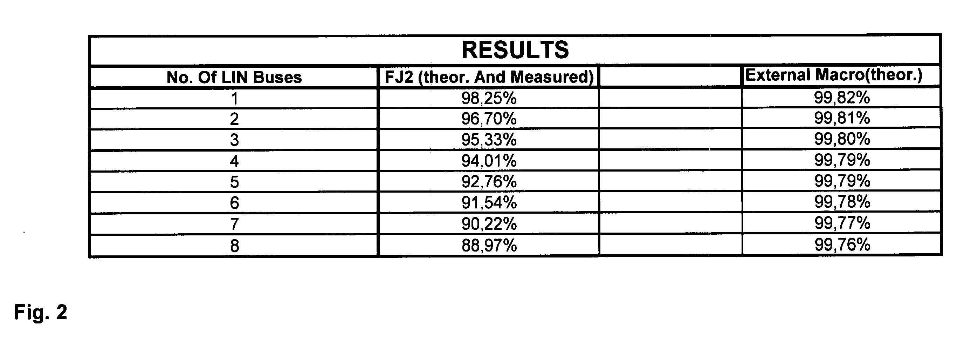

The results, shown in Fig. 2, are describing the demand for real LIN hardware in future automotive systems. Multi channel LIN applications won't be capable to drive CAN-software, OSEK and communication layer + application software in addition to the pure LIN driver without regret for the timing needed by the automotive bus-protocols.

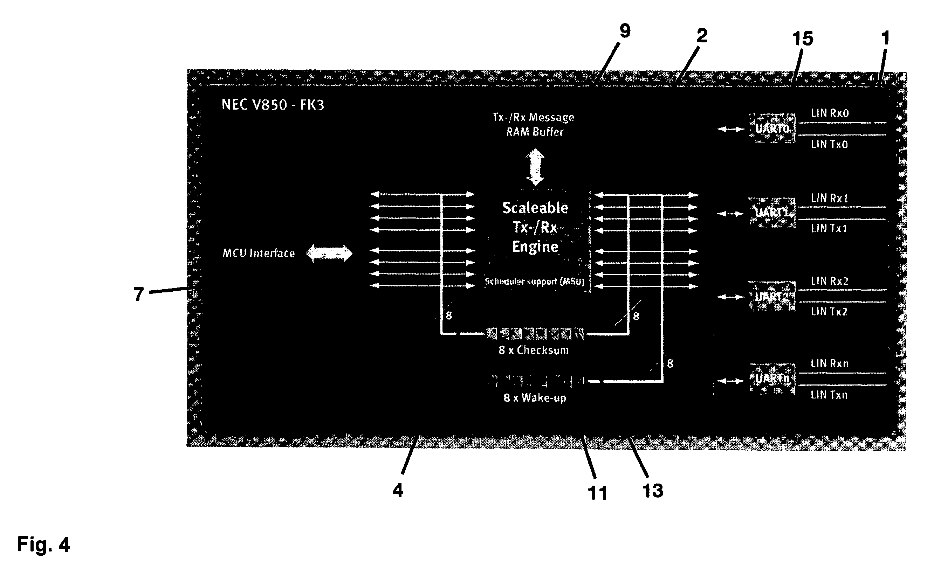

The block-diagram, as referenced in Fig. 4 is a first overview of the implemented features.

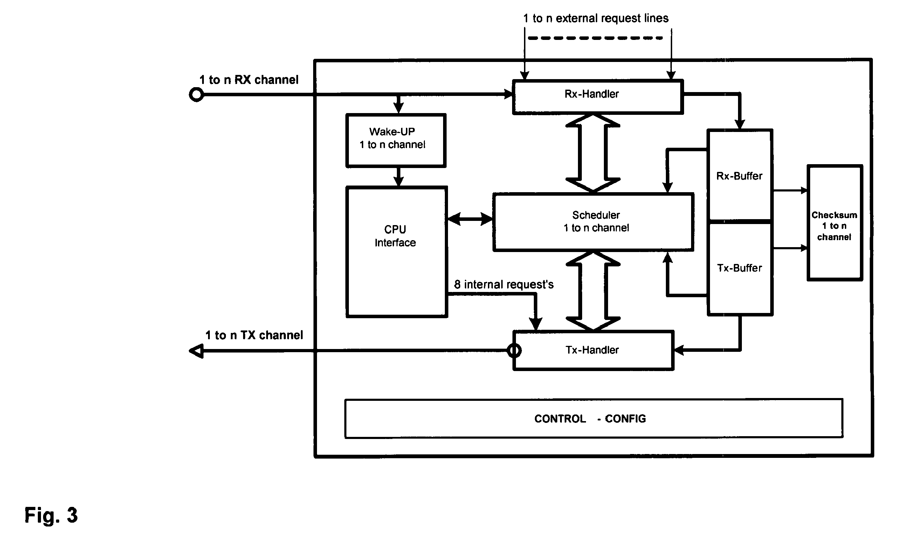

As seen in Fig. 3, the MLM is built to serve 1 up to N LIN-channels in a free configurable way.

Central to the MLM is the scheduler, which is directly connected to the Rx- and the Tx-handler.

Both get their data right from the MLM-RAM, which is filled by the CPU on request by the Data handling interrupt which is released while the current LIN-identifier handling on the bus is finished.

Also directly connected to the MLM-RAM is the checksum-unit, which calculates the checksum for Tx-Identifier to be sent out, as well as for Rx-Identifier to be checked with the checksum sent by the sending LIN-Slave.

A subunit to the MLM is the Wake-Up unit, which is responsible to send a LIN-conformant Wake-Up signal to the bus, or to receive a Wake-Up signal and start correspondent actions within the CPU or the MLM.

### Scalable Transmit-/receive unit

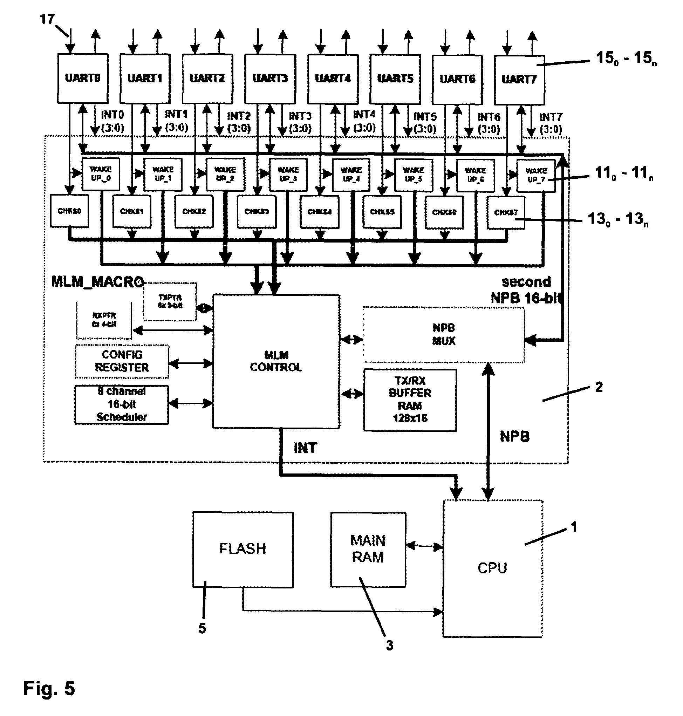

Following Fig. 5 provides detailed information regarding the scalability of the MLM-solution as implemented according to the invention.

The MLM-core including checksum-, wakeup and scheduler unit takes care of the hardware-infrastructure as provided by different microcontrollers.
In the above given example, 8 UART macros are provided. The MLM is able to connect to any given number of these UART (e.g. five) in any given manner (e.g. No. 1, 3, 5, 6 and 7).

The UART interrupts are pipelined by the MLM, so each MLM interrupt source (Rx-Full, Tx-Empty, Wake-up, Scheduler and Error) is distributed to all 8 channels. Also one wake-up engine is added to each adapted channel.

To support real-time issues for each LIN channel, one checksum calculation and addition unit is adapted.

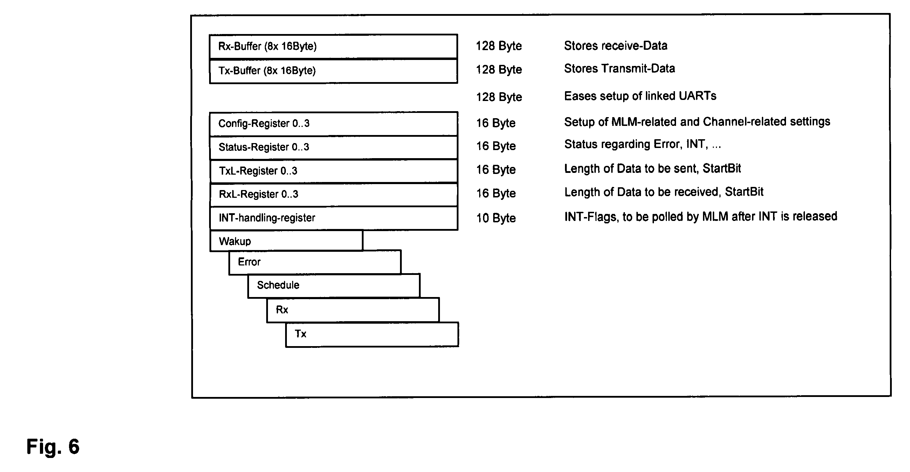

The memory-usage is shown in Fig. 6.

A set of configuration, control and status registers is provided to run the MLM with global settings, channel-dependent and LIN-dependent settings.

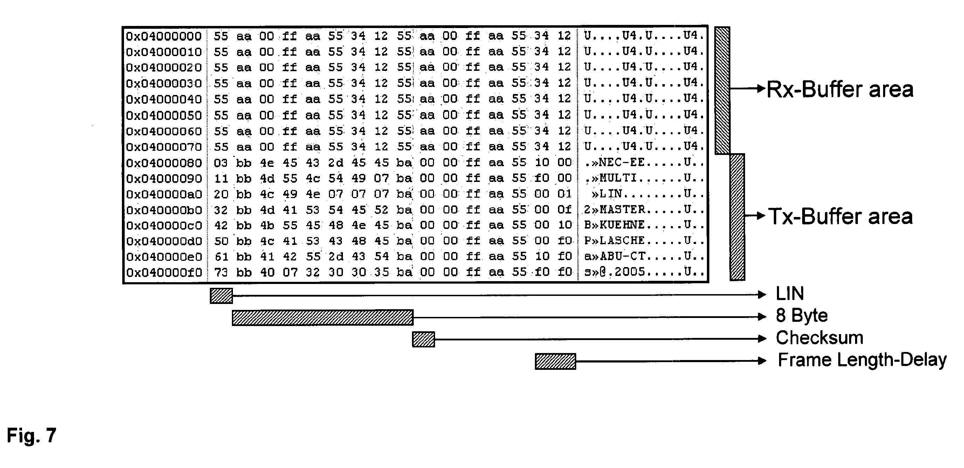

The buffer-RAM shown in Fig. 7 is also available in non-MLM mode, so all applications, e.g. buffered serial applications, can take benefit of it.

The power save modes as defined by the LIN specification are supported by the circuitry.

A wake-up-signal with a length of 250 µsec up to 5 msec can easily be detected by this circuit.

At the end, a detected wake-up signal leads to an interrupt to the MLM engine.

The MLM solution solves the performance-problem of current Multi channel LIN applications in different ways.

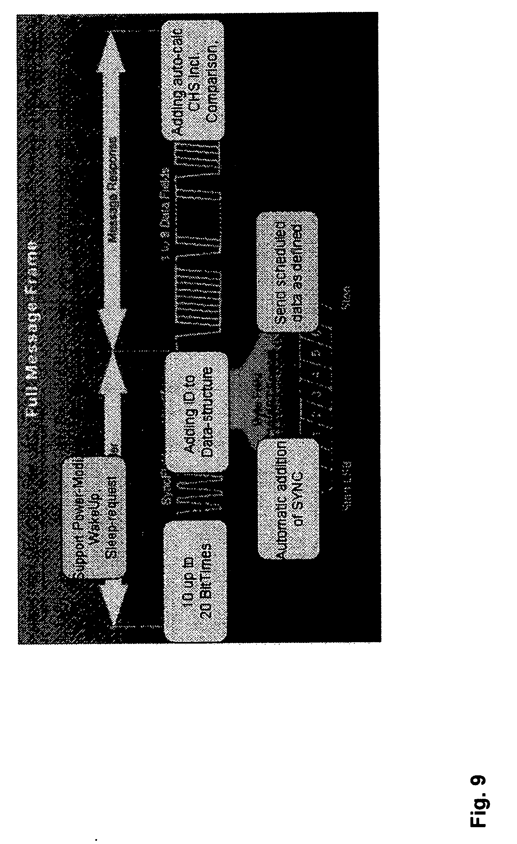

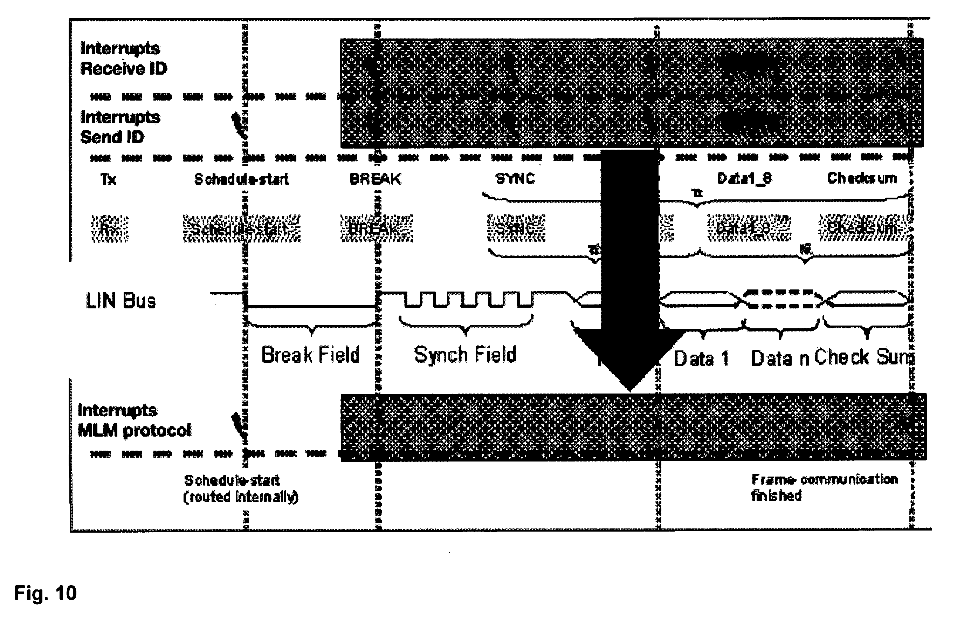

In a first step, several items, formerly only supported by pure Software drivers, are transferred into hardware-routines. This is shown in Fig. 9.
In a second step, compared to a standard LIN software solution, the used interrupts for one handled LIN frame are lowered from 24 to 1 (by 95%). (see Fig. 10)

A next strategic point is the handshaking mechanism between the scheduler interrupt and the data-handling interrupt.

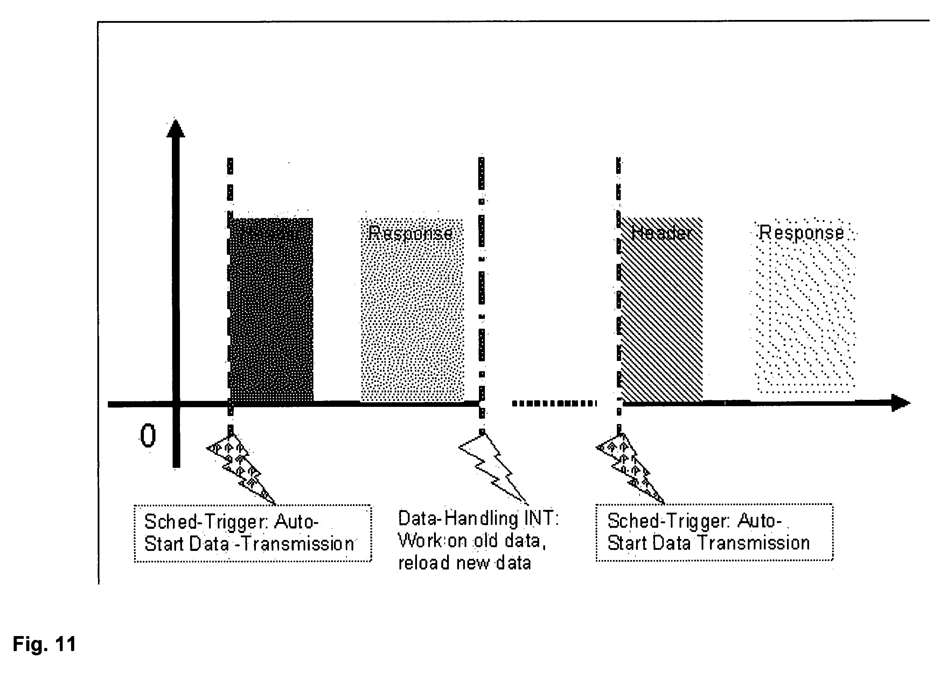

Fig. 11 shows the complete overview regarding this item:

To ensure that no interrupt will be lost during handling the LIN communication on all attached LIN buses, a special LIN-INT-controller within the MLM stores the incoming INT sources.

After releasing one interrupt, the next one will directly be issued.

As additional support for LIN-application schedules, the MLM is able to start the schedules as given within the LIN schedule-table automatically.

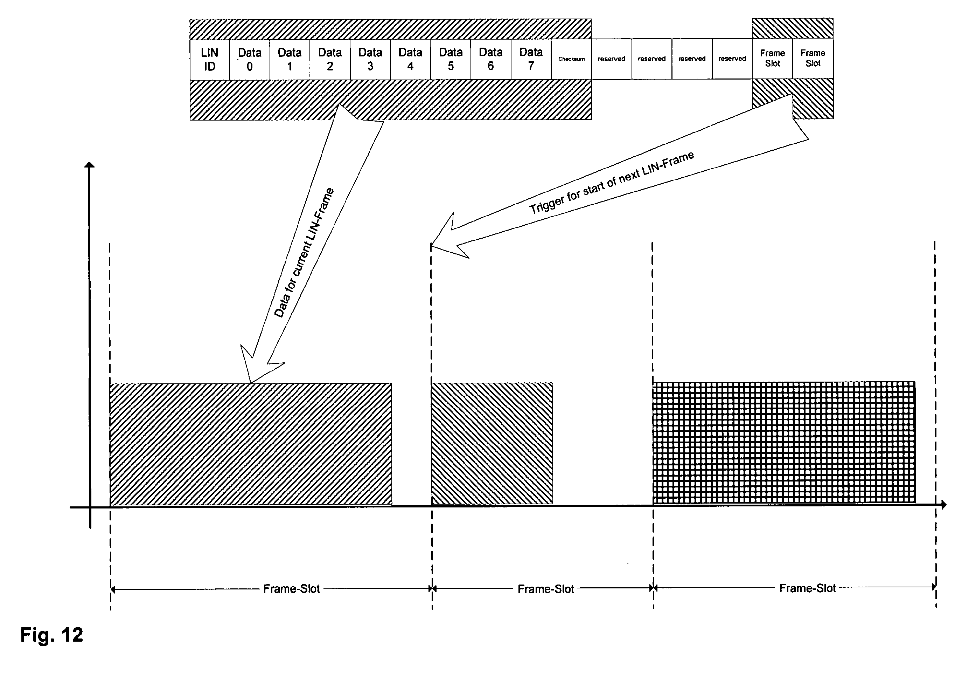

Fig. 11 and Fig. 12 give a short overview regarding the implemented state machine.

The application uses a buffer RAM to provide the current schedule entry to the MLM hardware.

While the preceding schedule has run out, the schedule state machine scans the Rx buffer (if an Rx schedule is set next) and the Tx-buffer (if an Tx schedule is set next), respectively.

The very first schedule has to be started manually; all following schedules will be executed by the MLM macro.

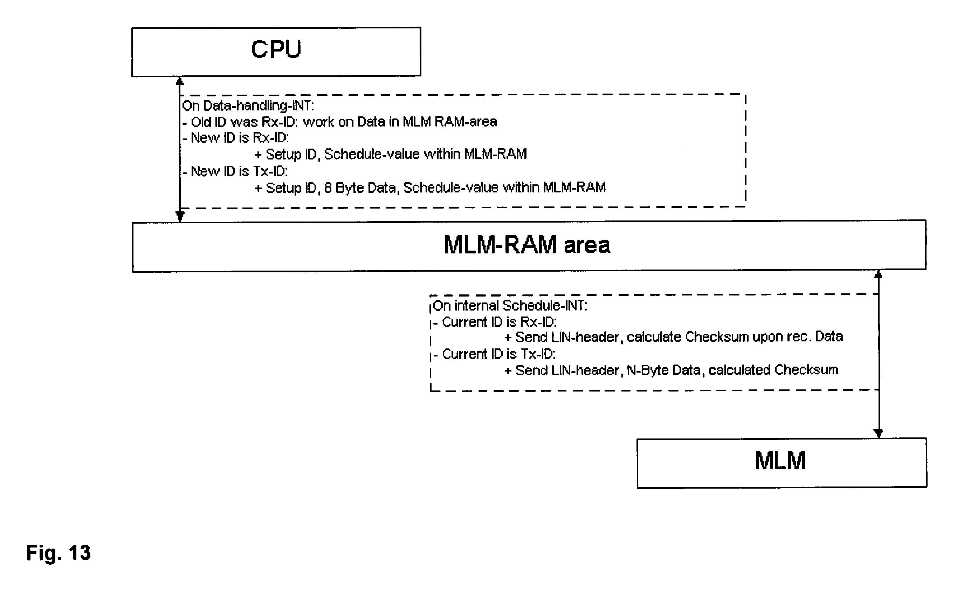

The layout of the used space within the buffer is shown within Fig. 13.

In case, the preceding schedule has run out, and both, the Rx and Tx buffer scheduling entries are empty (e.g. in case of a sleep-request), the next following schedule (e.g. after wakeup) will be treated as initial schedule and therefore has to be started manually by software.

The MLM solves today's LIN problems within multi channel LIN applications effectively.

The central idea behind the multi LIN master is to provide a message scheduling unit (MSU) which is central to the MLM. All available LIN channels are scanned actively for messages to be activated by the scheduler.

The MLM overcomes today's problems implementing multi-LIN solutions by providing by a centralized automatic link between the data-scheduling unit and the data, which has to be handled on the different LIN channels. Thus, the handshaking mechanism between the interrupts for the data to be handled and the scheduler-start saves resources and automates the process, how the scheduling of data has to be processed.

The interrupt load is significantly lowered by fully automatically handling of the reception and transmission of data, which is already stored within the regarding register. In addition, there is scalable support for a user-defined number of LIN buses.

This encloses not only the pure protocol handler, but also the implementation of additional LIN-functionality like support for self-programming via LIN (by enabling different MLM channels to send non LIN-standard frames with up to 255 Bytes in a row).

Most of the LIN specification is implemented in hardware, reducing the code-size of a LIN driver for the MLM to a very minimum.

The valuable benefit of all the above described implementations is the possibility, to setup a scalable multi channel LIN-system for 1 to N LIN buses, which perfectly fits into the current hardware structure.

With the added value of Interrupt-repetition, 32Byte of RAM-space for each channel and support for diagnosis a big advantage is available.

Referring back to Figs. 4 and 5 the scalable multi LIN master (MLM) 2 comprises a scalable transmission/receiving engine 4, checksum units 11, wake-up units 13 and a transmission/receiving message RAM buffer 9. The MLM 2 communicates with interfaces 15, which in turn are connected to LIN buses 17. Furthermore, an MCU interface 7 is provided which communicates with a central processing unit 1 (see Fig. 5). Furthermore, the CPU 1 is equipped with a flash memory 5 and a main RAM 3.

Data to be exchanged with the interfaces 15 and the scalable engine 4 are stored in RAM buffer 9, and all interfaces 15 are regularly monitored by the scalable engine 4. As mentioned before the only task to be handled by a CPU 1 is shifting data between the CPU and the MLM unit 2 together with initial setting-up the schedule timings. Accordingly, during operation of the system the load of the CPU 1 is reduced in comparison to conventional systems, and due to the MLM unit according to the invention a plurality of LIN buses can be managed by a single CPU.

Not shown in the drawings is that with each of the LIN buses 17 at least a sensor and/or actuator is connected, wherein data received from the sensors are managed by the scheduling unit, and data to operate the actuators are sent by the scheduling unit.

Furthermore, although in Fig. 5 eight interfaces 15 corresponding to the LIN buses 17 are provided. This serves only as an example, and the system can be scaled as desired.

### Crosslink to the next schedule

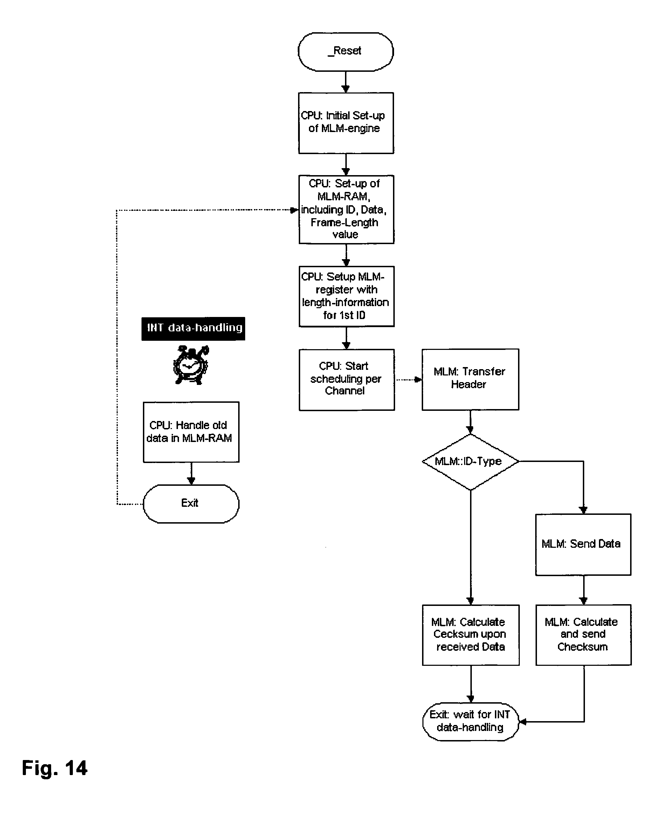

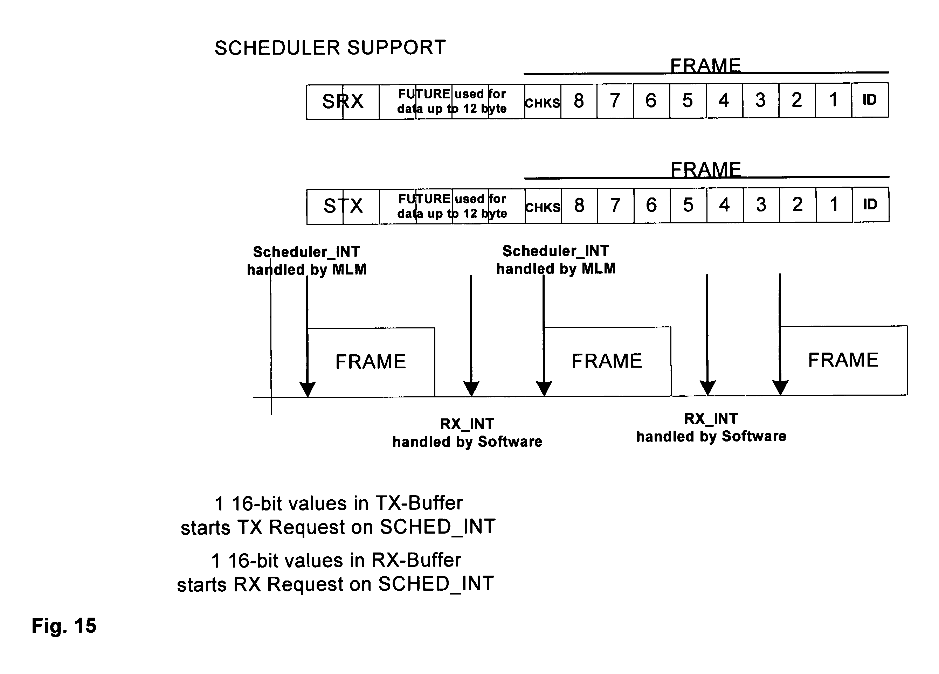

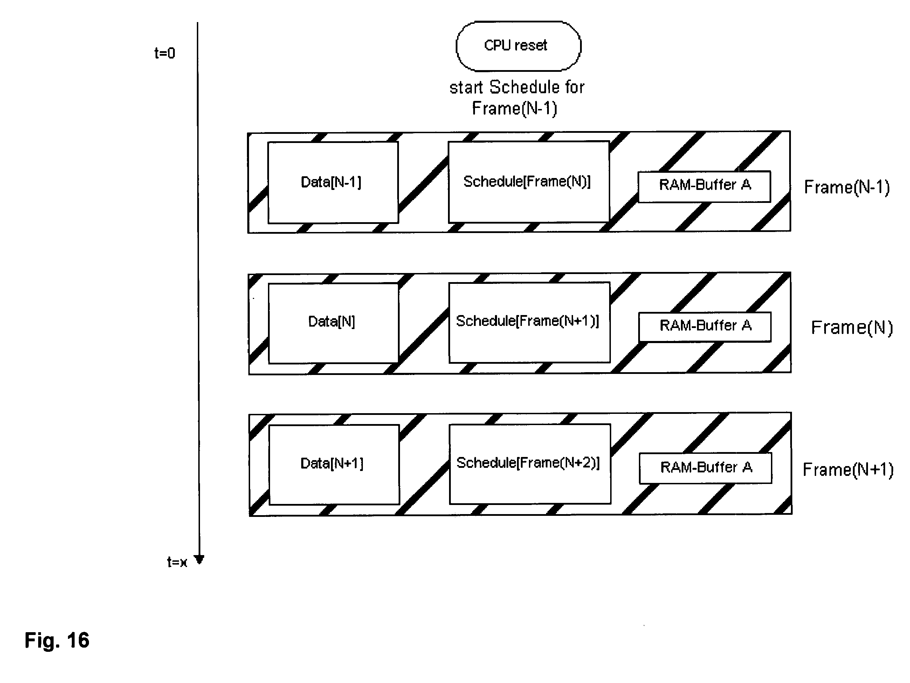

As seen in Fig. 11 to 16, the MLM RAM-area contains information for the application-data to be handled via the LIN-bus, as well as scheduling information, how long the current schedule will last.

The feature of MLM regarding this item is the crosslink between the data, which has currently to be handled with the information of the next following schedule-entry within one RAM-area.

While the initial setup for the MLM is done, the first data bundle is transferred to the MLM-RAM by CPU-request. Afterwards, the first schedule-value is also written into the same RAM-area.

After starting the data-transfer for the first entry, the data-bytes out of the RAM-area are handled. The schedule-entry, also included with this RAM-area, points out, when the next data-interaction with the LIN-bus has to be started. In the meantime, the data are handled by the MLM and the CPU takes care of setting-up new data and a new schedule-value.

At the end of the given time-interval, the LIN-header as base for the new data is sent with the schedule-information based on the preceding buffer-information.

### Configurable Checksum Unit:

The MLM is not build monolithic but using (not re-using) several logical blocks. One of them is the checksum unit, which is - in case of the MLM - configured to be part of the MLM. Customers may wish to exclude this checksum unit to be not part of the MLM, so this would be configured to be excluded.

## Claims

1. Data communication system comprising a plurality of serial buses (17) connected to sensors and/or actuators, and a central processing unit (1), **characterized by** a message scheduling unit (2) interposed between the central processing unit (1) and the serial buses (17) for monitoring the serial buses (17) for messages to be activated.

2. Data communication system (1) further comprising a message transmit and receive unit for communicating data with the buses.

3. Data communication system according to claim 2, wherein the message transmit and receive unit comprises a message buffer (9).

4. Data communication system according to claim 2 or 3, wherein the message transmit and receive unit provides current data for the serial buses (17) with a crosslink to a next schedule which has to be enabled.

5. Data communication system according to one of claims 1 to 4, wherein the message scheduling unit (2) comprises a configurable checksum unit (13) for each serial bus (17).

6. Data communication system according to one of claims 1 to 5, wherein the message scheduling unit (2) comprises a wake-up unit (11) for each serial bus (17).

7. Data communication system according to one of claims 1 to 6, wherein the serial buses are local interconnect network buses (LIN).

8. Data communication system according to one of claims 1 to 7, wherein each bus is connected to the message scheduling unit (2) by a universal asynchronous receiver and transmitter interface (UART).

9. Data communication systems according to one of claims 1 to 8, wherein incoming receiption and/or transmission requests are handled in parallel by the message scheduling unit.

## Amended claims

### Amended claims in accordance with Rule 86(2) EPC.

**1.** Data communication system comprising a plurality of serial buses (17) connected to sensors and/or actuators, and a central processing unit (1), **characterized by** a message scheduling unit (2) connected between the central processing unit (1) and the serial buses (17) for monitoring the serial buses (17) for automatically starting scheduled entries for a message transmit and receive unit for communicating data with the buses.

**2.** Data communication system according to claim 1, wherein the message transmit and receive unit comprises a message buffer (9).

**3.** Data communication system according to claim 1 or 2, wherein the message transmit and receive unit provides current data for the serial buses (17) with a crosslink to a next schedule which has to be enabled.

**4.** Data communication system according to one of claims 1 to 3, wherein the message scheduling unit (2) comprises a configurable checksum unit (13) for each serial bus (17).

**5.** Data communication system according to one of claims 1 to 4, wherein the message scheduling unit (2) comprises a wake-up unit (11) for each serial bus (17).

**6.** Data communication system according to one of claims 1 to 5, wherein the serial buses are local interconnect network buses (LIN).

**7.** Data communication system according to one of claims 1 to 6, wherein each bus is connected to the message scheduling unit (2) by a universal asynchronous receiver and transmitter interface (UART).

**8.** Data communication systems according to one of claims 1 to 7, wherein incoming reception and/or transmission requests are handled in parallel by the message scheduling unit.
